Europäisches Patentamt

European Patent Office

Office européen des brevets

(19)

(11) Numéro de publication: **0 172 126 B1**

(12) **FASCICULE DE BREVET EUROPEEN**

(45) Date de publication du fascicule du brevet:
**17.11.88**

(51) Int. Cl.⁴: **A 47 J 31/40, G 07 F 13/06**

(21) Numéro de dépôt: **85440048.8**

(22) Date de dépôt: **12.07.85**

(54) **Distribution de boissons chaudes ou froides préparées avec un extrait hydrosoluble.**

(30) Priorité: **27.07.84 FR 8412112**

(43) Date de publication de la demande:
**19.02.86 Bulletin 86/8**

(45) Mention de la délivrance du brevet:
**17.11.88 Bulletin 88/46**

(84) Etats contractants désignés:
**AT BE CH DE GB IT LI LU NL SE**

(56) Documents cités:
**DE - A - 2 119 982**
**FR - A - 1 396 391**
**FR - A - 1 564 088**
**FR - A - 2 448 330**
**GB - A - 2 083 443**
**US - A - 2 558 522**
**US - A - 2 660 351**
**US - A - 2 726 026**

(73) Titulaire: **Société de Fabrication d'Appareils Automatiques et Sirops dite : F.A.A.S. (Société à responsabilité limitée), 18, rue des Jardins, F-57210 Maizières-les-Metz (Moselle) (FR)**

(72) Inventeur: **Ciekanski, François, 1, Allée Grégor Mendel, F-54600 Villers-Les-Nancy (FR)**

(74) Mandataire: **Aubertin, François, Cabinet Lepage & Aubertin Innovations et Prestations 4, rue de Haguenau, F-67000 Strasbourg (FR)**

ACTORUM AG

## Description

L'invention concerne un distributeur de boissons chaudes et/ou froides préparées avec un extrait hydrosoluble composé essentiellement d'au moins un réceptacle d'emmagasinage de l'extrait hydrosoluble prélevé par des moyens doseurs composés d'un panneau supérieur solidaire du réceptacle d'emmagasinage, d'une table fixe et d'un tiroir soumis à un mouvement de va-et-vient par l'intermédiaire d'un électro-aimant, d'une alimentation en eau par l'intermédiaire d'un éventuel réservoir de stockage, de moyens de production d'eau chaude et/ou d'eau réfrigérée, d'un bec verseur pour introduire l'eau chaude et/ou froide dans un gobelet pourvu de la dose d'extrait hydrosoluble, d'une gobeleteuse et d'une niche d'accès permettant de prendre le gobelet contenant la boisson.

On connaît déjà, par le document FR-A 1 564 088, un distributeur automatique pour la préparation, notamment de boissons. Ce distributeur comporte un magasin d'emmagasinage de pots renfermant l'extrait hydrosoluble. Ces pots, de corps tronconique avec à leur base une collerette fermée par une couvercle, sont prélevés de ce magasin par une platine mobile en rotation, puis présentés à un organe de coupe. Le contenu de ces pots est déversé dans une chambre de mélange pourvue d'un mélangeur et alimentée en eau en provenance de l'un ou de l'autre des réservoirs, l'un renfermant l'eau chaude et l'autre l'eau froide. Après mélange, la boisson préparée se déverse dans un gobelet placé dans un support qui, de préférence, se trouve à l'extérieur de l'armoire du distributeur ou dans une cavité de celle-ci.

On connaît également un distributeur de boissons chaudes ou froides comprenant un réceptacle d'emmagasinage de l'extait hydrosoluble présentant à sa partie inférieur une vis d'Archimède traversant une ouverture réalisée dans la base du réceptacle et prélevant une certaine quantité de et extrait pour le verser dans une chambre percée à sa base. L'eau arrive tangentiellement dans cette chambre et entraîne l'extrait hydrosoluble vers un mixeur situé sous la chambre. En phase finale, l'eau rince ladite chambre. Le mixeur comporte une ailette rotative homogénéisant la boisson constituée. Celle-ci est ensuite déversée dans le gobelet. Bien entendu, les différentes parties sont reliées entre-elles par des tuyaux.

On connaît également, par le document GB-A 2 083 443, un appareil distributeur de boissons. Cet appareil comporte un certain nombre de réservoirs amovibles destinés à être remplis par du café et débouchant sur un cône d'alimentation se terminant par une valve électromagnétique destinée, lorsqu'elle est ouverte, à laisser tomber une certaine quantité de café moulu dans un gobelet. Cependant, ce distributeur de boissons ne possède pas d'alimentation automatique en gobelets. En outre, le dosage de la quantité d'extrait hydrosoluble à verser dans un gobelet ne se fait pas de façon volumétrique mais consiste à laisser s'écouler cet extrait hydrosoluble pendant un certain laps de temps pendant lequel la valve est maitenue ouverte. Par conséquent, une altération, même extrêmement légère, de l'extrait hydrosoluble par de la vapeur d'eau, entraîne nécessairement des variations de la quantité d'extrait qui s'écoule pendant un intervalle de temps déterminé et, par conséquent, des variations dans la qualité de la boisson.

En outre, lors de sa manipulation, le distributeur de boissons nécessite la manipulation successive de plusieurs commandes. Enfin, du fait que le gobelet est placé directement sous les différents orifices d'alimentation, il est inévitable, lors du fonctionnement de ce distributeur, qu'une certaine quantité de vapeur d'eau se mêlant à l'extrait hydrosoluble, vienne en partie colmater le siège de la valve, ce qui aboutit nécessairement à des variations dans la qualité et dans le caractère hygiénique de la boisson.

Cependant, ces distributeurs connus présentent plusieurs inconvénients. En premier lieu, ils ne sont pas conformes aux règles d'hygiène. En effet, tant dans la chambre de mélange que dans le mixeur se forme, petit à petit, un dépôt des extraits hydrosolubles car il s'est avéré que le rinçage final présente une efficacité insuffisante et le rebord interne de la chambre de mélange et/ou du mixeur conserve un reste d'extrait hydrosoluble. Cet inconvénient est d'autant plus perceptible lorsque le distributeur comporte plusieurs types d'extraits hydrosolubles. Un autre inconvénient des distributeurs connus est relatif à la disposition de la chambre par rapport à l'ouverture à travers laquelle passe la vis d'Archimède. En effet, à travers cette ouverture s'engage dans le réceptacle une certaine quantité de vapeur dégagée par l'eau chaude se déversant dans la chambre, cette vapeur influençant l'extrait hydrosoluble contenu dans le réceptacle. Ainsi, on risque un colmatage des extraits à l'emplacement de cette ouverture. Ceci peut entraîner non seulement une diminution de la quantité de l'extrait prévue par gobelet mais également le blocage de la vis d'Archimède.

Par ailleurs, on connaît également, par le document US-A 2 558 522, un distributeur de boissons correspondant au préambule de la revendication 1. Ce distributeur est composé essentiellement d'au moins un réceptacle d'emmagasinage de l'extrait hydrosoluble prélevé par des moyens doseurs composés d'un panneau supérieur solidaire du réceptacle d'emmagasinage, d'une table fixe et d'un tiroir soumis à un mouvement de va-et-vient par l'intermédiaire d'un électro-aimant, d'une alimentation en eau par l'intermédiaire d'un réservoir principal de stockage, de moyens de production d'eau chaude dans un gobelet pourvu de la dose d'extrait hydrosoluble, d'une gobeleteuse et d'une niche d'accès permettant de prendre le gobelet contenant la boisson.

Toutefois, ce distributeur présente les mêmes inconvénients que ceux des autres appareils cités ci-dessus. En effet, l'extrait hydrosoluble prélevé par les moyens doseurs est déversé dans un entonnoir présentant à son extrémité inférieure une ouverture. A proximité immédiate de cette ouverture débouche l'extrémité du bec verseur. De ce fait, il y a également détérioration de l'extrait hydrosoluble liée au passage d'une certaine quantité de vapeur d'eau provenant de l'eau chaude et, en conséquence, colmatage du siège de la valve de distribution de l'extrait hydrosoluble et dépôt d'extrait hydrosoluble humide sur l'ouverture de l'entonnoir, ce qui aboutit nécessairement à des variations dans la qualité et dans le caractère hygiènique de la boisson.

La présente invention a pour but de remédier à ces inconvénients. L'invention, telle qu'elle est caractérisée dans les revendications, résout le problème consistant à créer un distributeur de boissons chaudes et/ou froides préparées à partir d'eau et d'extraits hydrosolubles pour obtenir un café, un thé, un chocolat, un bouillon ou toutes autres boissons analogues particulièrement adapté aux boissons d'une petite collectivité ou entreprise de l'ordre de vingt à soixante dix consommations par jour, tout en représentant un faible coût d'investissement pour une gamme importante de sélection de boissons dont la quantité déterminée d'extrait hydrosoluble, prélevée par des moyens doseurs d'un des réceptacles d'emmagasinage, est déversée directement par lesdits moyens doseurs dans le gobelet formant écran d'étanchéité et que par un bec verseur, relié aux moyens de production d'eau chaude et/ou d'eau réfrigérée, on ajoute l'eau chaude ou froide directement dans le gobelet pourvu de l'extrait hydrosoluble, le mixage réalisé par des moyens d'homogénéisation de la boisson à la fin du parcours du gobelet étant situé à proximité immédiate d'une niche d'accès au gobelet.

Les avantages obtenus par la présente invention consistent essentiellement en ce que le réceptacle d'emmagasinage peut être rendu étanche et, de ce fait, on élimine toute détérioration de l'extrait hydrosoluble renfermé dans le réceptacle et qu'aucun dépôt d'extrait ne peut se former du fait que l'eau est ajoutée dans le gobelet même et non pas dans une chambre de mélange ou dans un mixeur, ce qui rend ce distributeur conforme aux prescriptions légales concernant l'hygiène.

L'invention est exposée ci-après plus en détail à l'aide de dessins représentant seulement un mode d'exécution.

La figure 1 représente, en vue en élévation et en coupe, un distributeur de boissons chaudes ou froides conforme à l'invention et comportant un seul réceptacle d'emmagasinage.

La figure 2 représente en vue en élévation et en coupe un distributeur de boissons chaudes ou froides comportant plusieurs réceptacles d'emmagasinage permettant l'obtention de boissons différentes.

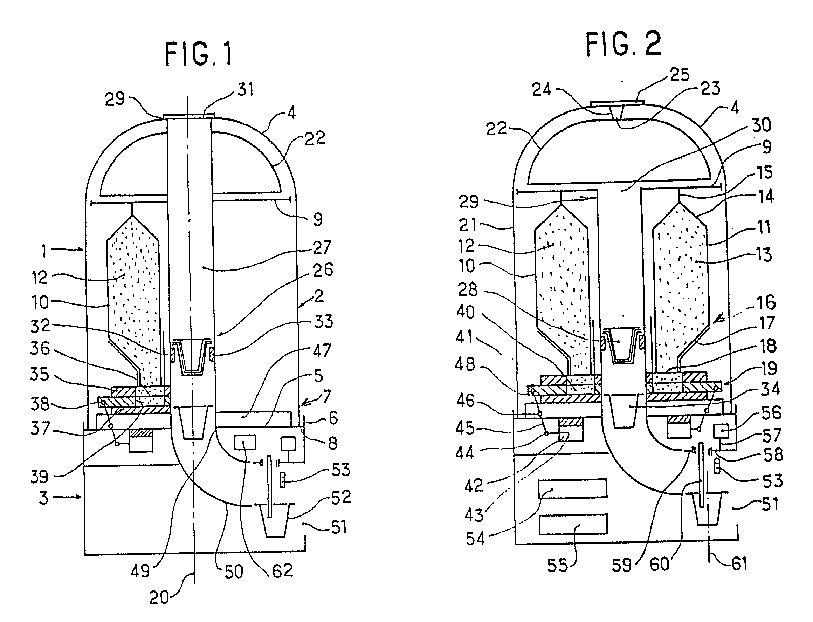

On se réfère aux figures 1 et 2.

Le distributeur de boissons chaudes et/ou froides 1 comporte un châssis modulaire composé d'un élément supérieur 2 et d'un élément inférieur 3, ces deux éléments 2 et 3 étant superposés et formant un petit meuble. L'élément supérieur 2 présente une forme cylindrique et comporte un dôme semi-sphérique 4. Cet élément supérieur 2, coiffant l'élément inférieur 3, est amovible, ce qui permet d'accéder aux différents moyens disposés et dans l'élément supérieur 2 et dans l'élément inférieur 3. A cet effet, l'élément inférieur 3 de forme également cylindrique présente à sa partie supérieure un plateau 5 pourvu d'un rebord 6 entourant l'extrémité inférieure 7 de l'élément supérieur 2 dont le chant 8 repose sur le plateau 5. Ainsi, il suffit de soulever l'élément supérieur 2 pour accéder à l'intérieur du distributeur 1.

L'élément supérieur 2 renferme un plateau 9 auquel sont fixés un ou plusieurs réceptacles 10, 11 servant de magasin aux extraits hydrosolubles 12, 13 permettant d'obtenir des boissons chaudes tels que café, thé, chocolat, bouillons et autres et/ou des boissons froides tels que jus de tomate, orangeade, citronnade et analogues. L'extrémité supérieure 14 de ces réceptacles 10, 11 est fixée au plateau 9 par des éléments d'accrochage 15 permettant de remplacer facilement le réceptacle vide par un réceptacle plein. L'extrémité inférieure 16 de ces réceptacles comporte un support conique tubulaire 17 fermé par une membrane 18 qui se déchire lors de la pose du réceptacle 10, 11 sur des moyens doseurs 19 solidaires de l'élément inférieur 3.

Si le distributeur 1 ne comporte qu'un seul réceptacle 10 ne permettant de réaliser qu'une seule boisson, ce réceptacle 10 est excentré par rapport à l'axe central vertical 20. Par contre, si le distributeur 1 comporte plusieurs réceptacles 10, 11 ces derniers sont disposés concentriquement à la paroi externe 21 de l'élément supérieur 2.

On dispose dans le dome semi-sphérique 4 un réservoir principal de stockage d'eau 22. Selon un premier mode d'exécution, ce réservoir principal 22 comporte à sa partie supérieure une ouverture 23 pourvue d'un entonnoir 24 débouchant sur la face externe du dôme 4 et obturée par un couvercle 25. Soit le dôme semi-sphérique 4 ainsi que le réservoir principal 22 sont transparents, ce qui permet de constater visullement le niveau d'eau dans le réservoir principal 22, soit il est nécessaire de prévoir des moyens de contrôle permettant de vérifier la quantité d'eau se trouvant dans ledit réservoir principal 22.

Selon un autre mode d'exécution, le réservoir principal 22 est directement branché sur le réseau d'eau potable. Il est, dans ce cas, souhaitable de prévoir un robinet à flotteur interrompant l'arrivée de l'eau lorsqu'un niveau déterminé est atteint.

Les differents réceptacles 10, 11 sont disposés concentriquement à une gobeleteuse 26 occupant le centre vertical du distributeur 1. Cette gobeleteuse 26 comporte un magasin de stockage 27 alimenté en gobelets 28 depuis son extrémité supérieure 29. Soit cette extrémité supérieure 29 aboute à un orifice 30 réalisé dans le plateau 9, cet orifice 30 étant accessible en retirant l'élément supérieur 2, soit le magasin de stockage 27 traverse le réservoir 22 et l'extrémité supérieure 29 débouche sur la face externe de la partie supérieure du dôme semi-sphérique 4. Cette extrémité supérieure 29 est obturée par un couvercle 31. Dans ce cas, il suffit d'enlever ce couvercle pour alimenter en gobelet 28 ledit magasin de stockage 27. Les gobelets 28 sont empilés dans le magasin de stockage 27 et sont maintenus par des butées 32, 33 qui s'écartent après utilisation du distributeur 1 pour laisser passer individuellement un gobelet qui, par gravité, tombe et se place à fleur avec les moyens doseurs 19 dans une position d'attente références par le chiffre 34.

Ces moyens doseurs 19 sont constitués d'un panneau supérieur 35. Dans ce dernier est réalisé un orifice 36 situé dans le même plan vertical que l'ouverture du support conique tubulaire 17. Par ailleurs, les moyens doseurs 19 comportent une table inférieure fixe 37. Le dessus de cette table inférieure fixe 37 est sur un plan horizontal légèrement au-dessus de celui du dessus du gobelet 34. Entre le panneau supérieur fixe 35 et le dessus de la table inférieure fixe 37 coulisse un tiroir 38. Dans ce tiroir 38 soumis à un mouvement de va-et-vient est réalisé un orifice 39 situé dans le prolongement de l'orifice 36 du panneau supérieur 35. L'épaisseur du tiroir 38 et le diamètre de l'orifice 39 déterminent un logement 40 et, par voie de conséquence, la quantité d'extrait hydrosoluble 12, 13 nécessaire à une boisson. En cas d'utilisation du distributeur 1, le tiroir 38 se déplace en direction du gobelet 34. La quantité d'extrait hydrosoluble renfermée dans le logement 40 est poussée et lorsque ce dernier se trouve au-dessus du gobelet 34, ledit extrait tombe dans le gobelet 34. Simultanément, le dessus 41 du tiroir 38 obture l'orifice 36. Lorsque le tiroir 38 est revenu à sa place, une partie de l'extrait contenu dans le réceptacle 10, 11 se déverse dans le logement 40 à travers les orifices 36 et 39.

Le mouvement de va-et-vient du tiroir 38 est assuré par un électroaimant 42 dont l'axe 43 est relié par une articulation 44 à l'extrémité d'un levier 45 pivotant autour d'un axe de rotation 46 solidaire d'un plateau 47. L'autre extrémité est reliée par une articulation 48 au tiroir 38.

Dans un autre mode de réalisation, il pourrait être envisagé que l'électro-aimant soit dans le prolongement du tiroir doseur à l'arrière de celui-ci.

Selon un mode de réalisation, on prévoit pour chaque réceptacle 10, 11 des moyens doseurs 19.

Selon un autre mode de réalisation, on ne prévoit qu'un ensemble de moyens doseurs 19 pour la totalité des réceptacles 10, 11. Il suffit de prévoir un entraînement en rotation soit du plateau 9 seul, soit du plateau 9 et du panneau supérieur 35, cette rotation étant sollicitée par un sélecteur.

Le plateau 47 comporte une ouverture 49 sur laquelle débouche l'extrémité supérieure d'un conduit de guidage 50 du gobelet 34 contenant l'extrait hydrosoluble déversé par le tiroir 38 des moyens doseurs 19. En phase d'attente, le gobelet 34 obture cette ouverture 49 et forme écran d'étanchéité, entre l'élément supérieur 2 et l'élément inférieur 3.

Ainsi, en cas d'émanation de vapeur ou d'humidité ambiante pouvant pénétrer à l'intérieur du distributeur 1 par la niche d'accès 51 ou par le gobelet 52 contenant la boisson désirée, cette vapeur d'eau et/ou d'humidité ambiante ne pouvant pas altérer les extraits renfermés dans les réceptacles 10, 11. Le conduit de guidage 50 dirige le gobelet contenant l'extrait hydrosoluble sous un bec verseur 53 relié par un tuyau à des moyens de production d'eau chaude et/ou d'eau réfrigérée.

L'élément inférieur 3 renferme les moyens de production d'eau chaude et/ou d'eau réfrigérée.

Les moyens de production d'eau chaude sont un appareil de chauffage 54 formé par un réservoir secondaire de faible volume contenant un élément chauffant qui joue de rôle de chauffage instantané. Ce réservoir secondaire relié par un tuyau au réservoir principal 22 comporte une vanne électromagnétique temporisée permettant un prélèvement déterminé d'eau chaude et située sur le tuyau reliant le réservoir secondaire au bec verseur 53. Par ailleurs, ce réservoir secondaire est pourvu de deux thermostats, l'un réglant la température de l'eau chaude et, l'autre, servant d'élément de sécurité agissant lors d'un échauffement excessif de l'appareil de chauffage 54.

Les moyens de production d'eau réfrigérée sont un appareil de refroidissement 55 comportant un groupe compresseur provoquant une circulation dans un serpentin d'un fluide réfrigérant, ce serpentin étant logé dans un deuxième réservoir secondaire également relié par un tuyau au réservoir principal. Le volume d'eau réfrigérée est dirigé vers le bec verseur 53 par une vanne électromagnétique temporisée. On prévoit également un thermostat réglant la température de l'eau réfrigérée tout en empêchent la prise en glace de l'appareil de refroidissement 55.

A proximité de la niche d'accès 51 au gobelet 52 disposé sous le bec verseur 53, le distributeur 1 comporte des moyens d'homogénéisation de la boisson désirée. Ces moyens sont un élément moteur 56 dont l'arbre 57 entraîne en rotation un bras 58 dont l'extrémité libre est pourvue d'une pince 59 maintenant l'extrémité supérieure d'une palette 60 de préférence en matière plastique. L'extrémité inférieure de cette palette 60 plonge dans le gobelet 52 et remue la boisson. La palette 60 est désaxée par rapport au centre 61 du gobelet 52 pour obtenir un meilleur résultat de mixage. Après mixage, la pince 59 s'ouvre et la palette 60 reste dans le gobelet 52. On prévoit également un magasin de stockage 62 de palettes 60 présentant les palettes individuellement à la prise de la pince 59.

La mise en marche du distributeur 1 est provoquée par les moyens de commande habituels.

En particulier, il peut être envisagé un distributeur de boissons dans lequel le réservoir de stockage 22 est placé dans l'élément inférieur 3 et non pas sous le dôme semi-sphérique 4 comme décrit ci-dessus.

Dans un autre mode de réalisation, le distributeur peut être directement relié au réseau d'alimentation d'eau, ou même relié directement à une arrivée d'eau réfrigérée et/ou une arrivée d'eau chaude. Dans ce cas, le jet d'eau projeté sous pression, excentré par rapport à l'axe du gobelet, et tangentiel par rapport au bord du gobelet, homogénéise suffisamment la boisson.

Dans un mode de réalisation particulier, les réceptacles 10, 11 peuvent comporter à leur base un tiroir doseur jetable à usage unique, ces réceptacles étant fixés par un système d'encliquetage sur le corps de la gobeleteuse.

**Revendications**

1. Distributeur de boissons chaudes et/ou froides préparées avec un extrait hydrosoluble composé essentiellement d'au moins un réceptacle d'emmagasinage (10, 11) de l'extrait hydrosoluble (12, 13) prélevé par des moyens doseurs composés d'un panneau supérieur (35) solidaire du réceptacle d'emmagasinage (10, 11), d'une table fixe (37) et d'un tiroir (38) soumis à un mouvement de va-et-vient par l'intermédiaire d'un électro-aimant (42), d'une alimentation en eau par l'intermédiaire d'un éventuel réservoir principal de stockage (22), de moyens de production d'eau chaude et/ou d'eau réfrigérée (54, 55), d'un bec verseur (53) pour verser l'eau chaude et/ou froide dans un gobelet (34) pourvu de la dose d'extrait hydrosoluble, d'une gobeleteuse (26) et d'une niche d'accès (51) permettant de prendre le gobelet contenant la boisson, caractérisé en ce que les moyens doseurs (19) comportent une table inférieure fixe (37) dont le dessus est sur un plan horizontal légèrement au-dessus de celui du gobelet en attente (34) et un tiroir (38) soumis à un mouvement de va-et-vient pour déverser directement une quantité déterminée d'extrait hydrosoluble contenu dans son orifice (39) et prélevé d'un des réceptacles d'emmagasinage (10, 11) dans ledit gobelet en attente (34), ce dernier étant pratiquement à fleur avec les moyens doseurs (19) et formant écran d'étanchéité en obturant une ouverture (49) d'un conduit de guidage (50) dirigeant, par la suite, le gobelet (34) contenant la dose d'extrait hydrosoluble vers le bec verseur (53) relié aux moyens de production d'eau chaude (54) et/ou d'eau réfrigérée (55) puis, après adjonction de l'eau chaude ou froide, vers des moyens (56 à 60) d'homogénéisation de la boisson, pour, finalement, présenter le gobelet (34), pourvu de la boisson homogénéisée, à proximité immédiate de la niche d'accès (51).

2. Distributeur de boissons selon la revendication 1, caractérisé en ce qu'il comporte un élément supérieur (2) de forme cylindrique superposé à un élément inférieur (3), également de forme cylindrique, présentant à sa partie supérieure un plateau (5) pourvu d'un rebord (6) entourant l'extrémité inférieure (7) de l'élément supérieur (2) reposant par son chant (8) sur le plateau (5), la séparation des deux éléments (2, 3) se faisant par simple soulèvement de l'élément supérieur (2), cet élément supérieur (2) présentant un dôme semi-sphérique (4), une alimentation en eau par l'intermédiaire d'un éventuel réservoir principal de stockage d'eau (22), un plateau (9) auquel est accroché un réceptacle d'emmagasinage (10, 11) d'extraits hydrosolubles (12, 13) excentré par rapport à l'axe central vertical (20) du distributeur (1) et la gobeleteuse (26), cette dernière, occupant le centre vertical du distributeur (1), ayant un magasin de stockage (27) dont une extrémité supérieure (29) traverse le réservoir principal (22) et débouche sur la face externe de la partie supérieure d'un dôme semi-sphérique (4) transparent, les gobelets (28) situés dans le magasin de stockage (27) étant empilés et maintenus par des butées (32, 33) dont l'extrémité supérieure (29) aboute à un orifice (30) réalisé dans le plateau (9).

3. Distributeur de boissons selon les revendications 1 et 2, caractérisé en ce que l'élément supérieur (2), comprenant le dôme semi-sphérique (4) transparent, comporte, en plus d'une alimentation en eau, par l'intermédiaire d'un éventuel réservoir principal (22) transparent pour contrôler visuellement le niveau de l'eau renfermé dans ce dernier et présentant à sa partie supérieure une ouverture (23) pourvue d'un entonnoir (24) débouchant sur la face externe du dôme semi-sphérique (4) et obturé par un couvercle (25), plusieurs réceptacles (10, 11) amovibles, accrochés au plateau (9) et disposés concentriquement à la paroi externe (21) de l'élément supérieur (2), chaque réceptacle (10, 11) présentant à son extrémité inférieure (16) un support conique tubulaire (17) fermé par une membrane (18) se déchirant lors de la pose du réceptacle (10, 11) sur les moyens doseurs (19).

4. Distributeur de boissons selon les revendications 1 et 2, caractérisé en ce que l'élément inférieur (3) comporte les moyens doseurs (19); les moyens de production d'eau chaude formés d'un appareil de chauffage instantané (54) comportant un réservoir secondaire de faible volume contenant un élément chauffant et relié, d'une part, à l'alimentation en eau par l'intermédiaire d'un réservoir principal (22), et, d'autre part, au bec verseur (53), une vanne électromagnétique temporisée, assurant le prélèvement d'une quantité déterminée d'eau chaude du réservoir principal (22), et deux thermostats, l'un réglant la température de l'eau chaude et, l'autre servant d'élément de sécurité agissant lors d'un échauffement excessif de l'appareil de chauffage (54); les moyens de production d'eau réfrigérée constitués d'un appareil de refroidissement (55) comportant un groupe compresseur, d'un réservoir secondaire renfermant un serpentin à travers lequel circule le fluide réfrigérant en provenance du groupe compresseur et relié, d'une part, à l'alimentation en eau par l'intermédiaire d'un éventuel réservoir principal (22) et, d'autre part, au bec verseur (53), d'une vanne électromagnétique temporisée, assurant le prélèvement d'une quantité déterminée d'eau réfrigérée, d'un thermostat réglant la température de l'eau réfrigérée tout en empêchant la prise en glace de l'appareil de refroidissement (55); le conduit de guidage (50) du gobelet dans lequel a été déversé l'extrait hydrosoluble et comportant une extrémité supérieure débouchant sur une ouverture (49) d'un plateau (47) séparant l'élément supérieur (3) de l'élément inférieur (2); les moyens d'homogénéisation de la boisson constitués, d'une part, d'un élément moteur (56) dont l'arbre (57) entraîne en rotation un arbre (58) dont l'extrémité libre est pourvue d'une pince (59) maintenant l'extrémité supérieure d'une palette (60) de préférence en matière plastique dont l'extrémité inférieure plonge dans le gobelet, ladite palette (60) restant dans le gobelet (34) à la fin du mixage et, d'autre part, d'une pince (59) s'ouvrant après le mixage pour libérer la palette (60) restant dans le gobelet rempli de boisson; et un magasin de stockage (62) des palettes (60) dirigeant individuellement les palettes (60) vers la pince (59).

5. Distributeur de boissons selon les revendications 1 et 2, caractérisé en ce que l'élément inférieur (3) comporte un seul ensemble de moyens doseurs (19) coopérant avec le support conique (17) des réceptacles (10, 11) se présentant devant ces moyens doseurs (19) par suite de la rotation du plateau (9) et du panneau supérieur (35).

6. Distributeur de boissons selon la revendication 1, caractérisé en ce que l'électro-aimant (42), conférant au tiroir (38) des moyens doseurs (19) le mouvement de va-et-vient, comporte un axe (43) relié par une articulation (44) à l'extrémité d'un levier (45) pivotant autour d'un axe de rotation (46) solidaire du plateau (47) et dont l'autre extrémité est reliée par une articulation (48) au tiroir (38), cet électroaimant (42) étant situé dans l'alignement du tiroir (38) à l'arrière de celui-ci.

7. Distributeur de boissons selon les revendications 1 et 2, caractérisé par le fait que le réservoir principal de stockage (22) est disposé, soit dans le dôme semi-sphérique (4), soit dans l'élément inférieur (3).

8. Distributeur de boissons selon les revendications 1 et 2, caractérisé en ce que l'élément supérieur (2) comporte plusieurs réceptacles (10, 11) comportant à leur base un tiroir doseur jetable à usage unique, ces réceptacles étant fixés par un système d'encliquetage sur le corps de la gobeleteuse (26).

**Patentansprüche**

1. Automat für die Herstellung von heissen und/oder kalten Getränken aus einem wasserlöslichen Extrakt, der im wesentlichen aus mindestens einem Vorratsbehälter (10, 11) für den wasserlöslichen Extrakt (12, 13) besteht, der mittels Dosierungsgeräten aus einem fest zum Vorratsbehälter (10, 11) gehörenden oberen Paneel (35), einem fixen Tisch (37) und einer mittels eines Elektromagneten (42) hin und her bewegten Lade (38) entnommen wird, einer Wasserzuführung mittels eines eventuellen Hauptreservoirs (22), den Apparaturen für die Herstellung von heissem und/oder gekühltem Wasser (54, 55), einem Auslasshahn (53) für die Einleitung des heissen und/ oder kalten Wassers in den für die Einzelmenge des wasserlöslichen Extrakts vorgesehenen Becher (34), ein Becherspender (26) und einer Entnahmenische (51), die die Entnahme des Bechers mit dem Getränk gestattet, und sich dadurch auszeichnet, dass die Dosierungsapparatur (19) mit einem unteren festen Tisch (37) ausgestattet ist, dessen Oberfläche leicht oberhalb der Ebene des oberen Randes des zu füllenden Bechers (34) liegt und deren Lade (38) mit ihrer Hin- und Herbewegung die festgelegte Menge des in seiner Öffnung (39) enthaltenen wasserlöslichen Extrakts aus den Vorratsbehältern (10, 11) direkt in den genannten wartenden Becher schüttet (34), der sich genau vor der Dosierungsapparatur (19) befindet und einen dicht abschliessenden Schirm bildet, indem er die Öffnung (49) der Führungsleitung (50) abschliesst, die in der Folge den Becher (34) mit der Einzeldosis des wasserlöslichen Extrakts zum Auslasshahn (53), der an die Geräte zur Erzeugung von heissem (54) und/oder gekühltem (55) Wasser angeschlossen ist, und nach der Zufügung von heissem oder kaltem Wasser zu den Apparaturen (56 bis 60) für die Homogenisierung des Getränks dirigiert und schliesslich, nach Homogenisierung des Getränks, den Becher (34) in unmittelbarer Nähe der Entnahmenische (51) präsentiert.

2. Getränkeautomat nach Patentanspruch 1, der dadurch gekennzeichnet ist, dass er aus einem Oberteil (2) in Zylinderform über einen ebenfalls zylindrisch geformten Unterteil (3) besteht, das auf seiner Oberseite eine Platte (5) mit einem Einfassungsring (6) aufweist, der die Unterkante (7) des mit seiner Schmalseite (8) auf der Platte (5) aufliegenden Oberteils (2) umfasst. Die Trennung der beiden Teile (2, 3) ist einfach mittels Anheben des Oberteils (2) durchzuführen. Letzteres weist eine halbkugelförmige Kuppel (4) auf, eine Wasserzuführung mittels eines eventuellen Hauptwasserreservoirs (22), eine Platte (9), an der die Vorratsbehälter (10, 11) der wasserlöslichen Extrakte (12, 13) exzentrisch im Verhältnis zur Vertikalachse (20) des Automaten (1) und des Becherspenders (26) befestigt sind. Letzterer nimmt das vertikale Zentrum des Automaten (1) ein und besitzt einen Vorratsbehälter (27), dessen oberes Ende (29) das Hauptreservoir (22) durchquert und die Aussenseite der transparenten halbkugelförmigen Kuppel (4) durchstösst. Die Becher (28) sind im Vorratsbehälter (27) gestapelt und werden von den Widerlagern (32, 33) gehalten, deren oberes Ende (29) zu einer in der Platte (9) vorgesehenen Öffnung (30) führt.

3. Getränkeautomat nach den Patentansprüchen 1 und 2, der dadurch gekennzeichnet ist, dass sein Oberteil (2), das eine halbkugelförmige transparente Kuppel umfasst (4), zudem eine Wasserversorgung mittels eines eventuellen transparenten Hauptreservoirs (22) für eine Sichtkontrolle des Niveaus des darin eingeschlossenen Wassers beinhaltet und an seiner Oberseite eine mit einem Trichter (24) versehene Öffnung (23) aufweist, der auf der Aussenseite der halbkugelförmigen Kuppel (4) mündet und mit einem Deckel (25) verschlossen wird, mehrere bewegliche Vorratsbehälter (10, 11), die an der Platte (9) befestigt sind und konzentrisch an der Aussenwand (21) des Oberteils (2) befestigt sind. Jeder Vorratsbehälter (10, 11) weist an seiner Unterseite (16) einen röhrenförmigen konischen Untersatz (17) auf, der mit einer Membrane (18) verschlossen ist, die zerrissen wird, wenn der Vorratsbehälter (10, 11) auf die Dosierapparatur (19) niedergesetzt wird.

4. Getränkeautomat nach den Patentansprüchen 1 und 2, der dadurch gekennzeichnet ist, dass sein Unterteil (3) des Dosiergerät (19) enthält. Der Apparat zur Erzeugung von heissem Wasser in der Gestalt eines Sofort-Heizgerätes (54) umfasst ein Sekundärreservoir mit geringem Volumeninhalt und eingebautem Heizelement und ist einerseits an eine Wasserzuführung mittels Hauptreservoir (22) und andererseits an den Ausflusshahn (53) angeschlossen. Ein zeitgesteuertes elektromagnetisches Ventil gewährleistet die Entnahme einer festgelegten Menge heissen Wassers aus dem Hauptreservoir (22). Zwei Thermostaten, von denen einer die Temperatur des heissen Wassers regelt und der andere als Sicherungselement gegen eine Überhitzung des Heizgerätes (54) fungiert. Der Apparat zur Erzeugung von gekühltem Wasser ist ein Kühlgerät (55), das aus einer Kompressor-Gruppe besteht, einem Sekundärreservoir, das eine Kühlschlange umschliesst, durch die die Kühlflüssigkeit aus der Kompressor-Gruppe zirkuliert, und das einerseits an eine Wasserzuführung mittels eines eventuellen Hauptreservoirs (22) und andererseits an den Ausflusshahn (53) angeschlossen ist. Ein zeitgesteuertes elektromagnetischen Ventil gewährleistet die vorbestimmte Menge gekühlten Wassers. Ein Thermostat regelt die Temperatur des gekühlten Wassers, damit die Vereisung des Kühlgeräts (55) vermieden wird. Die Führung (50) für die Becher, in die das wasserlösliche Extrakt geschüttet wurde, besitzt ein Oberteil, das in einer Öffnung (49) in der Platte (47) mündet und das Oberteil (2) vom Unterteil (3) trennt. Die Apparatur für die Homogenisierung des Getränks besteht einerseits aus einem Motorenelement (56), dessen Welle (57) einen Arm (58) in Drehbewegung versetzt, dessen freies Ende mit einer Klemme ausgestattet ist, die das obere Ende eines vorzugsweise aus Plastikmaterial hergestellten Rührstabs (60) hält, dessen unteres Ende in den Becher eintaucht; der erwähnte Rührstab (60) verbleibt im Becher (34) nach beendetem Umrühren; andererseits aus einer Zange (59), die sich nach beendetem Umrühren öffnet, um den Rührstab (60) freizugeben, der im Becher mit dem Getränk verbleibt, und einem Vorratsbehälter (62) für Rührstäbe (60), der die Rührstäbe (60) einzeln an die Zange (59) dirigiert.

5. Getränkeautomat nach den Patentansprüchen 1 und 2, der dadurch gekennzeichnet ist, dass sein Unterteil (3) nur eine einzige Dosierapparatur (19) enthält, die in Mitwirkung mit dem konischen Untersatz (17) der Vorratsbehälter (10, 11) letztere mittels einer Drehbewegung der Platte (9) und des oberen Paneels (35) vor der Dosierapparatur (19) vorbeiführt.

6. Getränkeautomat entsprechend dem Patentanspruch 1, der dadurch gekennzeichnet ist, dass der Elektromagnet (42), der der Lade (38) der Dosierapparatur (19) die Hin- und Herbewegung verleiht, eine Achse (43) enthält, die mittels eines Gelenks (44) an das Ende eines Hebels (45) angeschlossen ist, der um eine fest zur Platte (47) gehörenden Drehachse kreist, und dessen anderes Ende mittels eines Gelenks (48) mit der Lade (38) verbunden ist. Dieser Elektromagnet (42) ist in der Flucht der Lade (38) hinter derselbigen angebracht.

7. Getränkeautomat entsprechend den Patentansprüchen 1 und 2, der dadurch gekennzeichnet ist, dass das Hauptreservoir (22) entweder in der halbkugelförmigen Kuppel (4) oder in dem Unterteil (3) untergebracht ist.

8. Getränkeautomat entsprechend den Patentansprüchen 1 und 2, der dadurch gekennzeichnet ist, dass das Oberteil (2) mehrere Vorratsbehälter umfasst, die an ihrer Basis mit einer Wegwerf-Ladedosierung für einmaligen Gebrauch ausgestattet sind. Diese Vorratsbehälter (10, 11) sind mit einem System von Schnappverschlüssen an dem Gehäuse des Becherspenders befestigt (26).

**Claims**

1. A distributor of hot and/or cold drinks, prepared with a hydrosoluble extract, essentially consisting of, as a minimum:

a) a storage container (10, 11) of hydrosoluble extract (12, 13) from which a specific amount of extract is withdrawn by a dispensing means (19) comprised of an upper plate (35) integral with container (10, 11), a lower fixed plate (37), and a filler tray (38) subjected to a to-and-from movement by an electromagnetic actuator (42);

b) a supply of water by means of a possible main water storage reservoir (22);

c) means for producing hot and/or cold water (54, 55);

d) a filler spout (53) for introducing hot and/or cold water into a cup (52) containing a specific quantity of hydrosoluble extract;

e) a cup dispenser (26);

f) an access niche (51) for removing filled cup (52) containing the desired beverage; said drink distributor being distinguished by a dispensing means (19) comprised of a lower fixed plate (37), the upper surface of which is on a horizontal plane slightly above that of the cup (34) in filling position 1, an upper plate (35), and a filler tray (38); said filler tray having its chamber (40) filled by a specific quantity of hydrosoluble extract (12, 13), drawn from containers (10, 11), and being subjected to a to-and-from movement for emptying the specific quantity of hydrosoluble extract into cup (34) in filling position 1; the top of said cup (34) being virtually level with the upper surface of lower fixed table (37) forming a tight seal and thus blocking the opening (49) of cup guide channel (50); said cup guide channel then directing cup (34) containing the specific quantity of hydrosoluble extract to filling position 2 (52) beneath filler spout (53) connected to the means for hot (54) and/or cold (55) water production, and thence, after the addition of hot or cold water, to the means for homogenising (56–60) the drink, and, finally, offering cup (52), filled with the homogenised beverage, in the immediate vicinity of access niche (51).

2. A drink distributor, in accordance with Claim 1, distinguished by the presence of an upper unit (2), having a cylindrical form, resting upon a lower unit (3), also of cylindrical shape, with the upper part of said lower unit (3) featuring a support shelf (5) equipped with a rim (6) encircling the lower end (7) of upper unit (2), the edge (8) of which rests on shelf (5), with the separation of units (2) and (3) being accomplished by the simple lifting of upper unit (2); said upper unit (2) featuring a hemispherical dome (4), a supply of water by means of a possible main water storage reservoir (22), a panel (9) to which hydrosoluble extract storage container (10, 11) is attached by means of hooks, the axis of said storage container being eccentric with respect to the central vertical axis (20) of the distributor (1); (ref. Fig. 1) a cup dispenser (26) occupying the central vertical area of distributor (1) and containing a cup storage compartment (27), the upper end of which (29) penetrates support panel (9), main reservoir (22), and hemispherical dome (4) exiting on the external surface of the top of transparent, hemispherical dome (4); (ref. Fig. 2) a cup dispenser (26) containing cups (28) in storage compartment (27) being stacked and held by stops (32, 33), the upper and (29) of said storage compartment (27) leading to an opening (30) implemented in panel (9), said opening (30) being accessible after first removing upper unit (2).

3. A drink distributor, in accordance with Claims 1 and 2, distinguished by (ref. Fig. 2) an upper unit (2) comprised of a transparent, hemispherical dome (4) and including, in addition, a supply of water by means of a possible main reservoir (22), the latter also being transparent to permit visual checking of the enclosed water level, with said main water reservoir (22) featuring an opening (23) at the top connected to a funnel (24) leading to the external surface of hemispherical dome (4), the mouth of said funnel (24) being closed by a cover (25); several removable storage containers (10, 11) hooked to panel (9) and arranged concentrically with outer wall (21) of upper unit (2), each container (10, 11) featuring a hollow, conical support (17) at its lower end, said conical support (17) being closed by a membrane (18) which ruptures when container (10, 11) is placed on dispensing means (19).

4. A drink distributor, in accordance with Claims 1 and 2, distinguished by a lower unit (3) comprised of a means for producing hot water consisting of an instantaneous heating device (54) made up of a secondary, small-volume water storage tank containing a heating element and connected, on one side, to a supply of water possibly provided by means of a main reservoir (22) and, on the other side, to filler spout (53); a momentary electromagnetic valve assuring the withdrawal of a specific quantity of hot water from the secondary water tank; and two thermostats, one regulating the water temperature and the other serving as a safety element activated by excessive heat in heating device (54); a means for producing cold water consisting of a cooling device (55) comprised of a compressor group, a secondary water storage tank enclosing a coiled tube through which refrigerating fluid from the compressor group is circulated, and connected, on one side, to a supply of water possibly provided by means of a main reservoir (22) and, on the other side, to a filler spout (53); a momentary electromagnetic valve assuring the withdrawal of a specific quantity of cold water from the secondary water tank; a thermostat regulating the temperature of the cold water while preventing freezing of cooling device (55); a guide channel (50) for directing cup (34), containing a specific quantity of hydrosoluble extract, to filling position 2 (52), the upper end of said guide channel (50) amerging into an opening (49) in panel (47) which separates the upper (2) and lower (3) units; means for homogenizing the prepared drink consisting, on the one hand, of a drive unit (56) and drive shaft (57) which rotate arm (58), the free end of which is equipped with a clamp (59) grasping the upper end of a paddle (60), said paddle preferably being made of plastic material, with the lower end of said paddle (60) being immersed in filled cup (52) and remaining in same until completion of the mixing operation and, on the other hand, of clamp (59) which opens after mixing to release paddle (60), said paddle remaining in cup (52) now filled with the prepared drink; and a storage container (62) for the paddles (60) having the means to supply paddles individually to clamp (59).

5. A drink distributor, in accordance with Claims 1 and 2, distinguished by an upper unit (2) comprised of a single set of dispensing means (19) together with conical support (17) for containers (10, 11) said containers being positioned over filler tray (38) through the rotation of support panel (9) and upper plats (35).

6. A drink distributor, in accordance with Claim 1, distinguished by an electromagnetic actuator (42), which imports a to-and-from movement to filler tray (38) of dispensing means (19), comprised of an armature (43) connected by hinge pin (44) to one end of lever (45) which rotates about pivot (46), integral with panel (47), the other end of lever (45) being connected to hinge pin (48) fastened to the rear of filler tray (38).

7. A drink distributor, in accordance with Claims 1 and 2, distinguished by the fact that the main water storage reservoir (22) is located either inside hemispherical dome (4) or in lower unit (3).

8. A drink distributor, in accordance with Claims 1 and 2, distinguished by an upper unit (2) comprised of several storage containers (10, 11) having a single-use, disposable filler tray (38) at their base, said storage containers (10, 11) being attached to the body of cup dispenser (26) by a ratchet mechanism.

FIG. 1

FIG. 2